# EUROPEAN PATENT APPLICATION

(11) **EP 4 801 028 A1**
(43) Date of publication of application: **02.09.2026**
(21) Application number: 24954116.0
(22) Date of filing: 14.09.2024
(51) Int. Cl.: H04N 19/129, H04N 19/18

(54) **METHOD AND APPARATUS FOR CALCULATING TRANSFORM BLOCK COEFFICIENT COORDINATES FOR VIDEO DECODING, COMPUTER STORAGE MEDIUM, AND CHIP**

(71) Applicant: VeriSilicon Microelectronics (Shanghai) Co., Ltd., Shanghai 201203 (CN); VeriSilicon Microelectronics (Beijing) Co., Ltd., Beijing 100193 (CN); Verisilicon Microelectronics (Hainan) Co., Ltd., Haikou, Hainan 570208 (CN); VeriSilicon Microelectronics (Chengdu) Co., Ltd., Chengdu, Sichuan 610041 (CN); VeriSilicon Microelectronics (Nanjing) Co., Ltd., Nanjing, Jiangsu 210032 (CN); VeriSilicon Technology (Shanghai) Co., Ltd., Shanghai 201306 (CN)
(72) Inventor: LI, Changgui, Beijing 100193 (CN)
(74) Representative: Bayramoglu et al.
(86) International application number: PCT/CN2024/119066
(87) International publication number: WO 2026/055965

(57) **Abstract**

A calculation method includes: obtaining a bit stream of original video and transform blocks correspondingly; configuring a coefficient-position conversion table; calculating coordinates corresponding to transform coefficients in a transform block, according to coefficient-position conversion table; resuming decoding the bit stream according to coordinates of transform coefficients, to obtain video data having been decoded. By configuring the coefficient-position conversion table, dividing transform block into three regions, in combination with region characteristics, coordinates of transform coefficients are calculated out, so when transforming decoding sequence of transform coefficients into coordinates according to the coefficient-position conversion table, it is possible to achieve calculating coordinates of various transform coefficients according to one coefficient-position conversion table only, in combination with simple combination logic, thereby consumption of hardware resources is reduced when performing decoding operation with a non-SRCC enabling method.

## Description

### TECHNICAL FIELD

The present application relates to the technical field of video decoding, in particular to a calculation method and a calculation apparatus for calculating a plurality of coordinates of a plurality of transform coefficients in a transform block for video decoding, a computer storage medium, and a chip.

### BACKGROUND

With continuous development of a digital video coding and decoding technology, an AVS3 coding standard for an audio and video (AV) signal source is deduced. The AVS3 is a coding standard for an AV signal source having an 8K ultra-high definition video signal, and applied to a plurality of 5G industrial applications. Compared with a video coding standard of HEVC, the AVS3 coding standard has a coding performance improved close to 30%, while at a same coding rate, the AVS3 has a video quality obviously higher than that of H.265/HEVC.

The AVS3 coding standard provides two decoding methods for a plurality of transform coefficients in a transform block: an SRCC (single region clock cable) enabling method and a non-SRCC enabling method, wherein the SRCC enabling method allows a plurality of transform coefficients in a transform block to appear in a 32×32 region only; while the non-SRCC enabling method allows a plurality of transform coefficients in a transform block to appear at any positions of the transform block, wherein a largest transform block is 64×64. For the non-SRCC enabling method, it is relatively easy to obtain a scanning sequence for each of the plurality of transform coefficients in the transform block; however, the scanning sequence is unable to be used directly in a decoding process, instead, it requires to be converted into a plurality of coordinates before being used.

### TECHNICAL PROBLEM

An existing AVS3 reference codec, HPM, provides a coefficient scanning table for the plurality of transform blocks, so as to convert a decoding order of the plurality of transform coefficients in the transform block into a plurality of coordinates. However, since the plurality of transform blocks have a plurality of different kinds, and each of the plurality of transform coefficients may appear at any one position of a transform block in the non-SRCC enabling method, a data volume of the coefficient scanning table is extremely large. In order to ensure a certain level of hardware performance, in the prior art, the coefficient scanning table is usually stored in a register, resulting in occupying a large amount of hardware resources, further increasing a consumption of the hardware resources, which is unfavorable for a commercial implementation.

### TECHNICAL SOLUTION

In order to solve at least one technical problem in the prior art, the present application provides a calculation method and a calculation apparatus for calculating a plurality of coordinates of the transform coefficients in a transform block for video decoding, a computer storage medium, and a chip, so as to solve a problem in the prior art that an existing non-SRCC enabling method has a large consumption of the hardware resources during decoding.

In order to achieve the purpose stated above, the present application provides a calculation method for calculating a plurality of coordinates of a plurality of transform coefficients in a transform block for video decoding, comprising following steps:
obtaining a bit stream of an original video and a plurality of transform blocks corresponding to the bit stream;
configuring a coefficient-position conversion table, the coefficient-position conversion table having *N* elements arranged, such that each of the *N* elements corresponds to one of a plurality of diagonal lines arranged sequentially in a direction from upper left to lower right in an *N×N* transform block , and an element value of the element is a total number of all coefficients locating on an upper left region of a corresponding diagonal line;
calculating a plurality of coordinates corresponding to a plurality of transform coefficients in the transform block, according to the coefficient-position conversion table; and
resuming decoding the bit stream of the original video according to the plurality of coordinates corresponding to the plurality of transform coefficients in the transform block, so as to obtain video data that has been decoded.

Preferably, the coefficient-position conversion table has 64 elements arranged, and each element corresponds to one of a plurality of diagonal lines arranged sequentially in the direction from upper left to lower right in a 64×64 transform block.

Preferably, the diagonal line comprises a preset angle diagonal line directed from lower left to upper right.

Preferably, the step of calculating the plurality of coordinates corresponding to the plurality of coefficients in the transform block, according to the coefficient-position conversion table, comprises following steps:
dividing the plurality of transform blocks into a first region, a second region, and a third region;
determining a region where a present transform coefficient is located, according to the coefficient-position conversion table based on a scanning sequence of the plurality of transform coefficients; and
calculating a coordinate corresponding to a present transform coefficient according to a region characteristic of the region having been determined where the present transform coefficient is located.

Preferably, the step of dividing the plurality of transform blocks into the first region, the second region, and the third region, comprises following steps:
arranging a diagonal line on each of the plurality of transform coefficients, starting from an upper left corner of one of the plurality of transform blocks, so that a total number *s* of the diagonal lines arranged on the transform block is *s=w+h-1*, where *w* is a total number of the plurality of transform coefficients in a width direction of the transform block, *h* is a total number of the plurality of transform coefficients in a height direction of the transform block; arranging *t*= *min (w, h)*;
dividing a plurality of transform coefficients corresponding to a first group of *t-1* diagonal lines into the first region, starting from the upper left corner of the transform block;
dividing a plurality of transform coefficients corresponding to a first group of *t-1* diagonal lines into the third region, starting from a lower right corner of the transform block; and
dividing a plurality of transform coefficients corresponding to a plurality of remaining diagonal lines into the second region.

Preferably, the step of determining the region where the present transform coefficient is located, according to the coefficient-position conversion table based on the scanning sequence of the plurality of transform coefficients, comprises following steps:
calculating a first threshold and a second threshold according to a minimum edge length of the transform block, the coefficient-position conversion table and a total number of the plurality of transform coefficients in the transform block;
if the scanning sequence of a present transform coefficient is less than or equal to the first threshold, it is determined that the present transform coefficient is located in the first region;
if the scanning sequence of a present transform coefficient is greater than the second threshold, it is determined that the present transform coefficient is located in the third region; otherwise,
determining that a present transform coefficient is located in the second region.

Preferably, the step of calculating the first threshold and the second threshold according to the minimum edge length of the transform block, the coefficient-position conversion table and the total number of the plurality of transform coefficients in the transform block, comprises following steps:
arranging an element value of a (*t-1*)-th element in the coefficient-position conversion table as the first threshold; and
arranging a difference between the total number of the plurality of transform coefficients in the transform block and the element value of the (*t-1*)-th element in the coefficient-position conversion table as the second threshold.

Preferably, the step of calculating the coordinate corresponding to the present transform coefficient according to the region characteristic of the region having been determined where the present transform coefficient is located, comprises following steps:
calculating a position of a diagonal line corresponding to the present transform coefficient, according to the scanning sequence of the present transform coefficient and the coefficient-position conversion table; and
calculating a coordinate of the present transform coefficient according to a parity of a position of the diagonal line corresponding to the present transform coefficient.

Preferably, the step of calculating the position of the diagonal line corresponding to the present transform coefficient, according to the scanning sequence of the present transform coefficient and the coefficient-position conversion table, comprises following steps:
calculating the position of the diagonal line corresponding to the present transform coefficient, according to the scanning sequence of the present transform coefficient and the coefficient-position conversion table; and
calculating a difference between a position of a maximum coefficient and a position where the present transform coefficient is located, on a diagonal line corresponding to the present transform coefficient.

Preferably, the step of calculating the position of the diagonal line corresponding to the present transform coefficient, according to the scanning sequence of the present transform coefficient and the coefficient-position conversion table, comprises following steps:
in a case that the present transform coefficient is located in the first region, then judging whether the scanning sequence of the present transform coefficient is greater than an element value of an *i*-th element in the coefficient-position conversion table but smaller than or equal to an element value of an *(i+1)*-th element in the coefficient-position conversion table; if the scanning sequence is, then the present transform coefficient is determined to be located on an *i*-th diagonal line;
in a case that the present transform coefficient is located in the second region, then the present transform coefficient is determined to be locating on a *j*-th diagonal line, where *j*=(the scan order- the first threshold+ the minimum side length-1)/the minimum side length+ the minimum side length- 2; or
in a case that the present transform coefficient is located in the third region, then first turning over the scanning sequence of the present transform coefficient to the first region of the transform block, now a new scanning sequence is a difference between the total number of the transform coefficients in the transform block and an original scanning sequence plus 1; then judging whether the new scanning sequence of the present transform coefficient is greater than the element value of the *i*-th element in the coefficient-position conversion table but smaller than or equal to the element value of the *(i+1)*-th element in the coefficient-position conversion table; if it is, the present transform coefficient is determined to be locating on an *i*-th diagonal line.

Preferably, the step of calculating the difference between the position of the maximum coefficient and the position where the present transform coefficient is located, on the diagonal line corresponding to the present transform coefficient, comprises following steps:
if the present transform coefficient is located in the first region, the difference between the position of the maximum coefficient and the position where the present transform coefficient is located is a difference between the element value of the *(i+1)*-th element in the coefficient-position conversion table and the scanning sequence of the present transform coefficient;
if the present transform coefficient is located in the second region, the difference between the position of the maximum coefficient and the position where the present transform coefficient is located is (((the scanning sequence- the first threshold+ the minimum side length-1)>> a logarithmic value of the minimum edge length) << the logarithmic value of the minimum edge length)+ the first threshold- the scanning sequence; or
if the present transform coefficient is located in the third region, the difference between the position of the maximum coefficient and the position where the present transform coefficient is located is a difference between the element value of the *(i+1)*-th element in the coefficient-position conversion table and a new scanning sequence of the present transform coefficient, after the scanning sequence of the present transform coefficient having been turned over to the first region of the transform block.

Preferably, the step of calculating the coordinate of the present transform coefficient according to the parity of the position of the diagonal line corresponding to the present transform coefficient, if the present transform coefficient is located in the first region, comprises following steps:
in a case that the position of the diagonal line corresponding to the present transform coefficient is an odd number, a horizontal coordinate of the present transform coefficient is the difference between the position of the maximum coefficient on the diagonal line corresponding to the present transform coefficient and the position where the present transform coefficient is located, while a vertical coordinate is the position of the diagonal line corresponding to the present transform coefficient minus the difference between the position of the maximum coefficient on the diagonal line corresponding to the present transform coefficient and the position where the present transform coefficient is located; or
in a case that the position of the diagonal line corresponding to the present transform coefficient being an even number, a horizontal coordinate is the position of the diagonal line corresponding to the present transform coefficient minus the difference between the position of the maximum coefficient on the diagonal line corresponding to the present transform coefficient and the position where the present transform coefficient is located, while a vertical coordinate of the present transform coefficient is the difference between the position of the maximum coefficient on the diagonal line corresponding to the present transform coefficient and the position where the present transform coefficient is located.

Preferably, the step of calculating the coordinate of the present transform coefficient according to the parity of the position of the diagonal line corresponding to the present transform coefficient, if the present transform coefficient is located in the second region, comprises following steps:
in a case of the position of the diagonal line corresponding to the present transform coefficient being an odd number, if a width of the transform block is greater than or equal to a height of the transform block, then a horizontal coordinate of the present transform coefficient is the position of the diagonal line corresponding to the present transform coefficient plus a difference between the position of the maximum coefficient of the diagonal line correspondingly and the position where the present transform coefficient is located, before minus the height of the transform block and plus 1, while a vertical coordinate is the height of the transform block minus 1 before minus the difference between the position of the maximum coefficient of the diagonal line correspondingly and the position where the present transform coefficient is located; if the width of the transform block is less than the height of the transform block, the horizontal coordinate of the present transform coefficient is the difference between the position of the maximum coefficient on the diagonal line correspondingly and the position where the present transform coefficient is located, while the vertical coordinate is the position of the diagonal line corresponding to the present transform coefficient minus the difference between the position of the maximum coefficient on the diagonal line correspondingly and the position where the present transform coefficient is located; or
in a case of the position of the diagonal line corresponding to the present transform coefficient being an even number, if the width of the transform block is greater than or equal to the height of the transform block, then the horizontal coordinate of the present transform coefficient is the position of the diagonal line corresponding to the present transform coefficient minus the difference between the position of the maximum coefficient on the diagonal line correspondingly and the position where the present transform coefficient is located, while the vertical coordinate is the difference between the position of the maximum coefficient on the diagonal line correspondingly and the position where the present transform coefficient is located; if the width of the transform block is less than the height of the transform block, then the horizontal coordinate of the present transform coefficient is the height of the transform block minus 1 before minus the difference between the position of the maximum coefficient of the diagonal line correspondingly and the position where the present transform coefficient is located, while the vertical coordinate is the position of the diagonal line corresponding to the present transform coefficient plus the difference between the position of the maximum coefficient of the diagonal line correspondingly and the position where the present transform coefficient is located, before minus the height of the transform block and plus 1.

Preferably, the step of calculating the coordinate of the present transform coefficient according to the parity of the position of the diagonal line corresponding to the present transform coefficient, if the present transform coefficient is located in the third region, comprises following steps:
in a case of the position of the diagonal line corresponding to the present transform coefficient being an odd number, the horizontal coordinate of the present transform coefficient is the width of the transform block minus 1 before minus the difference between the position of the maximum coefficient of the diagonal line correspondingly and the position where the present transform coefficient is located, the vertical coordinate of the present transform coefficient is the height of the transform block minus 1 then adding the difference between the position of the maximum coefficient of the diagonal line correspondingly and the position where the present transform coefficient is located, followed by subtracting the position of the diagonal line corresponding to the present transform coefficient; or
in a case of the position of the diagonal line corresponding to the present transform coefficient being an even number, the horizontal coordinate of the present transform coefficient is the width of the transform block minus 1 before adding the difference between the position of the maximum coefficient of the diagonal line correspondingly and the position where the present transform coefficient is located, followed by subtracting the position of the diagonal line corresponding to the present transform coefficient, the vertical coordinate thereof is the height of the transform block minus 1 before minus the difference between the position of the maximum coefficient of the diagonal line correspondingly and the position where the present transform coefficient is located.

In order to solve the technical problem stated above in the prior art, the present application further provides a calculation apparatus for calculating the plurality of coordinates of the transform coefficients in the transform block for video decoding, configured to realize the calculation method for calculating the plurality of coordinates of the transform coefficients in the transform block for video decoding as stated above. The calculation apparatus comprises:
an acquisition circuit configured to acquire the bit stream of an original video and a transform block thereof correspondingly;
a transform circuit used for configuring the coefficient-position conversion table and calculating the coordinates corresponding to the coefficients in the transform block according to the coefficient-position conversion table; and
a decoding circuit configured to decode the original video to obtain the video data having been decoded according to the coordinates of the coefficients.

In order to solve the technical problem stated above in the prior art, the present application also provides a computer storage medium, the computer storage medium has an executable program stored; when the executable program is running, the calculation method for calculating the plurality of coordinates of the transform coefficients in the transform block for video decoding as stated above is achieved.

In order to solve the technical problem stated above in the prior art, the present application further provides a chip, the chip is coupling with a storage, configured to execute a computer program stored in the storage, so as to run the calculation method for calculating the plurality of coordinates of the transform coefficients in the transform block for video decoding as stated above.

### BENEFICIAL EFFECT

The present application provides the calculation method and the calculation apparatus for calculating the plurality of coordinates of the transform coefficients in the transform block for video decoding, the computer storage medium, and the chip, by configuring the coefficient-position conversion table and dividing the transform block into three regions, in combination with the region characteristic, the coordinates of the transform coefficients are calculated out, so that when transforming the decoding sequence of the present transform coefficients into the coordinates according to the coefficient-position conversion table, it is able to achieve calculating the coordinates of a plurality of various transform coefficients according to only one coefficient-position conversion table, in combination with a simple combination logic, thereby the consumption of the hardware resources is reduced when performing a decoding operation with a non-SRCC enabling method, and the problem is solved that an existing non-SRCC enabling method has a large consumption of the hardware resources during decoding.

### BRIEF DESCRIPTION OF THE DRAWINGS

FIG. 1 illustrates a flowchart of a calculation method for calculating a plurality of coordinates of a plurality of transform coefficients for video decoding provided in the present embodiment;
FIG. 2 illustrates a schematic structural diagram of a 64×64 transform block provided in the present embodiment;
FIG. 3 illustrates a schematic diagram showing a correspondence between the diagonal line and the element value of the element in the 64×64 transform block provided by the present embodiment;
FIG. 4 illustrates a flowchart of the step S3 provided by the present embodiment;
FIG. 5 illustrates a schematic diagram on a scanning sequence of the transform coefficients in an 8×4 transform block provided by the present embodiment;
FIG. 6 illustrates a schematic structural diagram on a calculation apparatus for calculating a plurality of coordinates of the transform coefficients in a transform block for video decoding provided by the present embodiment.

### DESCRIPTION OF THE EMBODIMENTS

It should be noted that the accompanying drawings are all in a very simplified form and using imprecise proportions, only for the convenience and clarity of assisting in explaining the purpose of the embodiments of the present application. In addition, the structure shown in the accompanying drawings is often a part of the actual structure. Specifically, the emphasis shown in each of the accompanying drawings is different, and sometimes different proportions may be adopted.

It is noted that the terms "first", "second", and more, used in the specification, claims, and accompanying drawings of the present application are intended to distinguish similar objects, in order to describe the embodiments of the present application, instead of describing a specific order or sequence. It should be understood that the structures used in this way may be interchangeable in appropriate circumstances. In addition, the terms 'including' and 'having', as well as any variations thereof, are intended to cover non-exclusive inclusions, such as processes, methods, systems, products, or devices that contain a series of steps or units, that are not necessarily limited to those having been clearly listed, but may also include other steps or units that are not clearly listed or inherent to these processes, methods, products, or devices.

Further, the relevant technical terms referred to in the present embodiment all depend on the AVS3 standard, wherein some technical terms are explained as follows:
a transform block, which is a basic unit in transforming an image data in an AVS3 video decoding process, which aims to convert an image from the pixel domain to the frequency domain, thereby it is easier to remove redundant information and perform compression; in the AVS3 standard, size and shape of the transform block can be adjusted flexibly according to the characteristics of the video content, so as to improve the coding efficiency;
a diagonal line: a reference line at an angle with a straight line in the horizontal direction;
a coefficient: a transform coefficient, referring to a value corresponding to a specific coordinate position in the transform block;
a position of a coefficient: a position corresponding to a decoding sequence for a coefficient in the transform block, sometimes referred to as a position of scanning sequence;
a coefficient-position conversion table: a conversion tool configured to convert a position of a transform coefficient into a coordinate.

In the prior art, during the AVS3 video decoding process, a transform coefficient solved by a non-SRCC enabling method has a scanning sequence with a big jump. In order to meet a performance requirement, it is necessary to solve a coordinate of the present transform coefficient in a same period after solving a decoding sequence thereof. A method adopted by a reference decoder is obtaining the coordinate from a coefficient-sequence conversion table. However, there are a plurality of various kinds of transform blocks, corresponding correspondingly to 23 coefficient scanning sequence tables including 4×4, 4×8, 8×4, 4×16, 16×4, 4×32, 32×4, 8×8, 8×16, 16×8, 64×8, 16×16, 16×32, 16×64, 32×16, 64×16, 32×32, 32×16, 32×16, 64×16, 32×32, 32×64, 64×32, 64×64. Therefore, a register of 14864×12 bits totally is required to store the coefficient scanning sequence tables, occupying a large number of hardware resources.

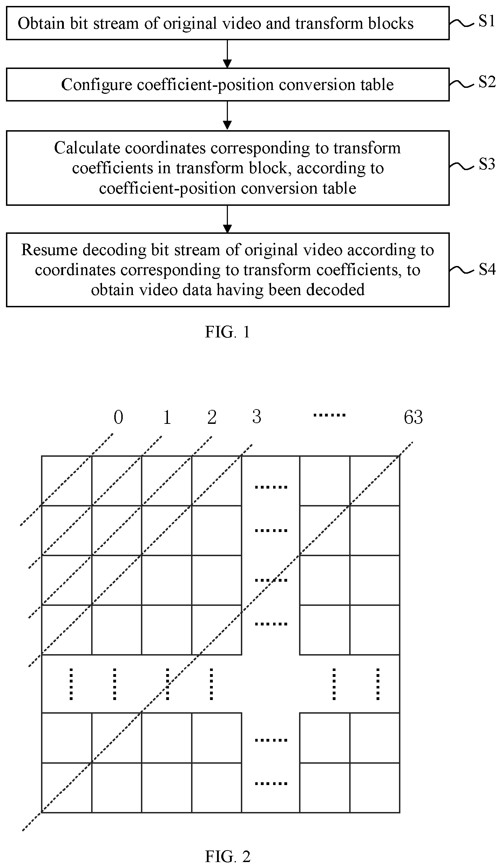

Based on this, the present embodiment provides a calculation method for calculating a plurality of coordinates of the transform coefficients in a transform block for video decoding, shown as FIG. 1, comprising steps:
S1, obtaining a bit stream of an original video and a plurality of transform blocks corresponding to the bit stream;
S2, configuring a coefficient-position conversion table;
S3, calculating a plurality of coordinates corresponding to a plurality of transform coefficients in the transform block, according to the coefficient-position conversion table;
S4, resuming decoding the bit stream of the original video according to the plurality of coordinates corresponding to the plurality of transform coefficients, so as to obtain a video data having been decoded.

Wherein the coefficient-position conversion table has *N* elements arranged, each of the *N* elements corresponds to one of a plurality of diagonal lines arranged sequentially in a direction from upper left to lower right, in an *N×N* transform block, and an element value of the element is a total number of all coefficients located in an upper left region of a corresponding diagonal line.

The present embodiment provides the calculation method for calculating the plurality of coordinates of the transform coefficients in the transform block for video decoding, by configuring the coefficient-position conversion table and dividing the transform block into three regions, in combination with the region characteristic, the coordinates of the transform coefficients are calculated out, so that when transforming the decoding sequence of the present transform coefficients into the coordinates according to the coefficient-position conversion table, it is able to achieve calculating the coordinates of a plurality of various transform coefficients according to only one coefficient-position conversion table, in combination with a simple combination logic, thereby the consumption of the hardware resources is reduced when performing a decoding operation with a non-SRCC enabling method, and the problem is solved that an existing non-SRCC enabling method has a large consumption of the hardware resources during decoding.

Specifically, in the present embodiment, the step S1, obtaining a bit stream of an original video and a plurality of transform blocks corresponding to the bit stream, wherein for the non-SRCC enabling method, the transform block may be any one of the 23 kinds of coefficient scanning sequence table listed above.

Further, considering a diversity of the plurality of various kinds of transform blocks, while for the non-SRCC enabling method, a maximum transform block is 64×64, thus in order to ensure that all kinds of the transform blocks are referenced to a same coefficient-position conversion table, so as to reduce an occupation of a plurality of hardware storage resources, in the present embodiment, the step S2: configuring the coefficient-position conversion table, specifically, it is arranging 64 elements in the coefficient-position conversion table, each of the elements corresponds to one of a plurality of diagonal lines arranged sequentially in the direction from upper left to lower right, in the 64×64 transform block, and the element value of the element is a total number of all the coefficients corresponding to upper left of the diagonal line.

Shown as FIG.2, which is a schematic structural diagram of a 64×64 transform block, where the diagonal line is a 45° oblique line directed from lower left to upper right (shown as the dashed line in FIG.2). Each of the plurality of diagonal lines passes through a plurality of the transform coefficients following a direction of 45°. It should be noted that when configuring the coefficient-position conversion table, only 64 diagonal lines passing through the transform coefficients in an uppermost line are considered, i.e. only half of all the plurality of diagonal lines locating at the upper left are considered.

Correspondingly, the 64 elements in the coefficient-position conversion table correspond sequentially to the plurality of diagonal lines arranged in the direction from upper left to lower right in the 64×64 transform block, and the element value of each of the 64 elements is a total number of all the coefficients locating in an upper left region of the diagonal lines correspondingly. If the coefficient-position conversion table is recorded as *diagonal_line_tb[64]*, then a first element in the coefficient-position conversion table is recorded as *diagonal_line_tb[0]*, a fourth element in the coefficient-position conversion table is recorded as *diagonal_line_tb[3]*,... a 64^{th} element in the coefficient-position conversion table is recorded as *diagonal_line_tb[63]*; correspondingly, a position of each of the plurality of diagonal lines arranged sequentially in the direction from upper left to lower right is recorded as 0,1,2,..., 63 in turn.

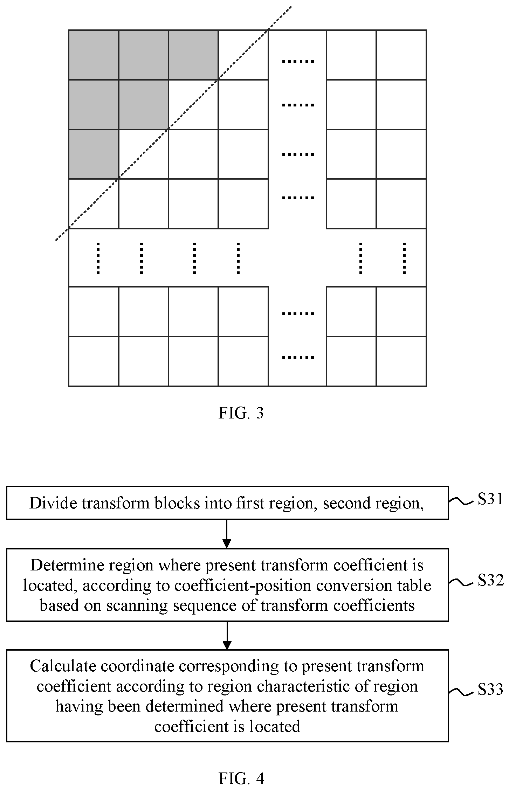

Shown as FIG.3, a dashed line represents a fourth diagonal line, and a position of the fourth diagonal line is 3, then the fourth diagonal line corresponds to the fourth element in the coefficient-position conversion table. Since at the upper left region of the diagonal line, there are 6 transformation coefficients (shown as 6 gray squares in Fig.3), thus the element value of the fourth element in the coefficient-position conversion table is 6, that is, *diagonal_line_tb[3]=6*. In such a way, the coefficient-position conversion table in a whole will be obtained: *diagonal_line_tb[64]={0, 1, 3, 6, 10, 15, 21, 28, 36, 45, 55, 66, 78, 91, 105, 120, 136, 153, 171, 190, 210, 231, 253, 276, 300, 325, 351, 378, 406, 435, 465, 496, 528, 561, 595, 630, 666, 703, 741, 780, 820, 861, 903, 946, 990, 1035, 1081, 1128, 1176, 1225, 1275, 1326, 1378, 1431, 1485, 1540, 1596, 1653, 1711, 1770, 1830, 1891, 1953, 2016}*.

Further, in the present embodiment, shown as FIG.4, a plurality of steps to achieve the step S3, calculating the plurality of coordinates corresponding to the plurality of coefficients in the transform block, according to the coefficient-position conversion table, comprise:
S31, dividing the plurality of transform blocks into a first region, a second region, and a third region.

Specifically, in the present embodiment, first, starting from an upper left corner of the transform block, arranging a diagonal line on each transform coefficient, so that a total number of the diagonal lines arranged on the transform block is *s=w+h-1*, where *w* is a total number of the plurality of transform coefficients in a width direction of the transform block, *h* is a total number of the plurality of transform coefficients in a height direction of the transform block, and setting *t*=*min* (*w, h*).

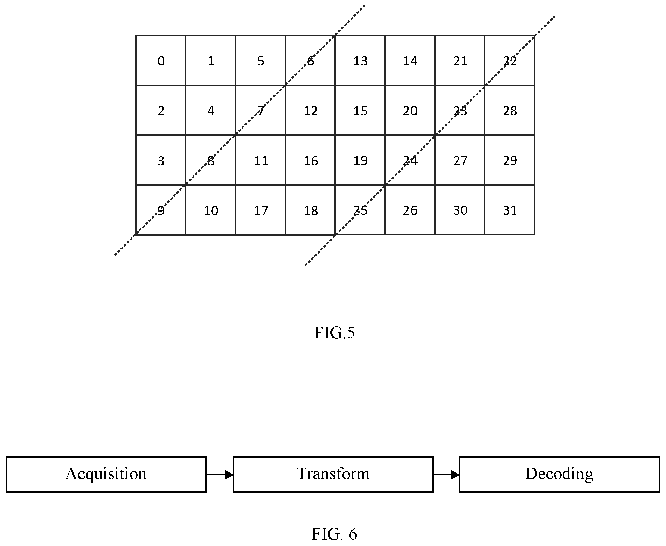

In an embodiment, shown as FIG.5, the width *w* of the transform block is 8, the height *h* is 4, thus totally there are 32 transform coefficients, each transform coefficient has only one diagonal line arranged, thus totally there are 11 diagonal lines correspondingly.

Then, starting from the upper left corner of the transform block, a plurality of the transform coefficients corresponding to first *t-1* diagonal lines are divided into the first region. Taking FIG.5 as an example, starting from the upper left corner of the transform block, a plurality of the transform coefficients corresponding to first 3 diagonal lines are divided into the first region, that is, a plurality of the transform coefficients having the scanning sequence marked as 0, 1, 2, 3, 4 and 5 are divided into the first region.

Further, starting from the lower right corner of the transform block, a plurality of the transform coefficients corresponding to first *t-1* diagonal lines are divided into the third region. Taking FIG.5 as an example, starting from the lower right corner of the transform block, a plurality of the transform coefficients corresponding to first 3 diagonal lines are divided into the third region, that is, a plurality of the transform coefficients having the scanning sequence marked as 26, 27, 28, 29, 30 and 31 are divided into the third region.

Further, a plurality of the transform coefficients corresponding to a plurality of the diagonal lines left are divided into the third region. Taking FIG.5 as an example, a plurality of the transform coefficients having the scanning sequence marked as 6, 7, 8, 9, 10, 11, 12, 13, 14, 15, 16, 17, 18, 19, 20, 21, 22, 23, 24, and 25 are divided into the second region.

As depicted, the transform block shown in FIG.5 is a rectangular, thus a total number of the diagonal lines corresponding to the first region and the third region is a minimum side length minus 1, and a total number of the diagonal lines corresponding to the second region is a maximum side length minus the minimum side length and further plus 1. If the transform block is a square, the second region will have one diagonal line only, and two regions locating at both sides of the diagonal line are the first region and the third region respectively.

In addition, since only a plurality of correspondences between the plurality of diagonal lines at the upper left part and the elements in the coefficient-position conversion table are considered when configuring the coefficient-position conversion table, thus, for a convenience of subsequent coordinate conversion, in the present embodiment, both the first region and the third region are limited to have a same number of the conversion coefficients.

S32, determining a region where a present transform coefficient is located, according to the coefficient-position conversion table based on a scanning sequence of the plurality of transform coefficients.

Specifically, in the present embodiment, the first threshold and the second threshold are calculated according to the minimum side length of the transformation block, the coefficient position transformation table, and the total number of transformation block coefficients in the transformation block.

In a specific embodiment, setting the minimum side length of the transform block as *min_side*, then *min_side=min (w, h)=t*. In a practical application, if the transform block is a rectangular, then the minimum side length is a length of a short side; if the transform block is a square, the minimum side length is a side length of the square. Supposing a total number of the transform coefficients in the transform block to be *num_coeffs*, then *num_coeffs=w×h*.

In the present embodiment, the first threshold is the element value of the *t-1*-th element in the coefficient-position conversion table. If the first threshold is *threshold_a*, then *threshold_a=diagonal_line_tb [t-1].*

Also, in the present embodiment, a value of the second threshold is a difference between the total number of the transform coefficients in the transform block and the element value of the *t-1*-th element in the coefficient-position transform table. If the second threshold is *threshold_b*, then *threshold_b=num_coeffs-diagonal-line_tb[t-1]*.

When determining a region where the present transform coefficient is located, a plurality of following principles shall be followed:
if the scanning sequence of a present transform coefficient is less than or equal to the first threshold, it is determined that the present transform coefficient is located in the first region;
if the scanning sequence of a present transform coefficient is greater than the second threshold, it is determined that the present transform coefficient is located in the third region; otherwise,
it is determined that a present transform coefficient is located in the second region.

S33, calculating a coordinate corresponding to a present transform coefficient according to a region characteristic of the region having been determined where the present transform coefficient is located.

Specifically, in the present embodiment,
S331, calculating a position of a diagonal line corresponding to the present transform coefficient, according to the scanning sequence of the present transform coefficient and the coefficient-position conversion table.

Wherein the scanning sequence of the present transform coefficient can be obtained by decoding, which is a part having been defined in an AVS3 specification. Personnel skilled in the art can obtain the scanning sequence by AVS3, thus no more statements herein.

In the present embodiment, the step comprises specifically:
first, calculating a position of a diagonal line corresponding to the present transform coefficient, according to the scanning sequence of the present transform coefficient and the coefficient-position conversion table. In a real application, the step comprises:
if the present transform coefficient is located in the first region, then judging whether the scanning sequence of the present transform coefficient is greater than an element value of an *i*-th element in the coefficient-position conversion table but smaller than or equal to an element value of an *(i+1)*-th element in the coefficient-position conversion table; if it is, then the present transform coefficient is determined to be locating on an *i*-th diagonal line, that is, the present transform coefficient is located in the *i*-th diagonal line. In the present embodiment, when a size of the transform block is *64×64*, *i=0, 1,......, 62*. Supposing the scanning sequence of the present transform coefficient after having been decoded to be *scan_pos*, then if *scan_pos* > *diagonal_line_tb[i]*, and *scan_pos≤diagonal_line_tb[i+1]*, then a position of the diagonal line corresponding to the present transform coefficient is *i*.

It is noted that, in the following calculation, the scanning sequence has been added with 1, that is. *Scan_pos'=scan_pos+1*.

If the present transform coefficient is located in the second region, then the present transform coefficient is located on a *j*-th diagonal line, that is, a position of the diagonal line corresponding to the present transform coefficient is *j*; wherein *j=((scan_pos-threshold_a+min_side-1)>>min_side_log)+min_side-2*, and *>>* represents a right shift, and *min_side_log=log₂(min_side).*

If the present transform coefficient is located in the third region, then first turning over the scanning sequence of the present transform coefficient to the first region of the transform block, now a new scanning sequence is a difference between the total number of the transform coefficients in the transform block and an original scanning sequence plus 1, that is, *scan_pos'=num_coeffs-scan_pos+1*; then judging whether the new scanning sequence of the present transform coefficient is greater than the element value of the *i*-th element in the coefficient-position conversion table but smaller than or equal to the element value of the *(i+1)*-th element in the coefficient-position conversion table; if it is, the present transform coefficient is determined to be locating on a diagonal line corresponding to the *i*-th element, that is, a position of the diagonal line corresponding to the present transform coefficient is *i*.

Then, calculating the difference between the position of the maximum coefficient on the diagonal line corresponding to the present transform coefficient and the position where the present transform coefficient is located. Where the position of the maximum coefficient refers to a position of a coefficient being last decoded on the diagonal line. In a practical application, the step comprises:
if the present transform coefficient is located in the first region, the difference between the position of the maximum coefficient and the position where the present transform coefficient is located is a difference between the element value of the *(i+1)*-th element in the coefficient-position conversion table and the scanning sequence of the present transform coefficient;
if the present transform coefficient is located in the second region, the difference between the position of the maximum coefficient and the position where the present transform coefficient is located is (((the scanning sequence- the first threshold+ the minimum side length-1)>> a logarithmic value of the minimum edge length) << the logarithmic value of the minimum edge length)+ the first threshold- the scanning sequence, wherein >> represents a right shift to remove a remaining part of a calculation result of (the scanning sequence- the first threshold+ the minimum side length-1), and << represents a left shift to restore the number of the coefficient;
if the present transform coefficient is located in the third region, the difference between the position of the maximum coefficient and the position where the present transform coefficient is located is a difference between the element value of the *(i+1)*-th element in the coefficient-position conversion table and a new scanning sequence of the present transform coefficient, after the scanning sequence of the present transform coefficient having been turned over to the first region of the transform block.

That is, supposing the difference between the position of the maximum coefficient on the diagonal line corresponding to the present transform coefficient and the position where the present transform coefficient is located is *delta_pos*, then in a case of the present transform coefficient being located in the first region, *delta_pos=diagonal_line_tb[i+1]-scan_pos*; in a case of the present transform coefficient being located in the second region, *delta_pos=(((scan_pos-threshold_a+min_side-1)>>min_side_log)<<min_side_log)+threshold_ a- scan_pos*; in a case of the present transform coefficient being located in the third region, *delta_pos=diagonal_line_tb[i+1]-scan_pos'*.

S332, calculating a coordinate of the present transform coefficient according to the parity of the position of the diagonal line corresponding to the present transform coefficient.

Specifically, in the present application, it shall also be calculated separately according to a region where the present transform coefficient is located:
If the present transform coefficient is located in the first region, when the position of the diagonal line corresponding to the present transform coefficient is odd, a horizontal coordinate of the present transform coefficient is the difference between the position of the maximum coefficient on the diagonal line corresponding to the present transform coefficient and the position where the present transform coefficient is located, while a vertical coordinate is the position of the diagonal line corresponding to the present transform coefficient minus the difference between the position of the maximum coefficient on the diagonal line corresponding to the present transform coefficient and the position where the present transform coefficient is located. That is, when *i* is odd, a coordinate *x=delta_pos*, and a coordinate *y=i-delta_pos*.

If the present transform coefficient is located in the first region, in a case of the position of the diagonal line corresponding to the present transform coefficient being even, the horizontal coordinate is the position of the diagonal line corresponding to the present transform coefficient minus the difference between the position of the maximum coefficient on the diagonal line corresponding to the present transform coefficient and the position where the present transform coefficient is located, while the vertical coordinate of the present transform coefficient is the difference between the position of the maximum coefficient on the diagonal line corresponding to the present transform coefficient and the position where the present transform coefficient is located. That is, in a case of *i* being even, the coordinate *x= i-delta_pos*, and the coordinate *y= delta_pos*.

If the present transform coefficient is located in the second region, in a case of the position of the diagonal line corresponding to the present transform coefficient being an odd number, if a width of the transform block is greater than or equal to a height of the transform block, then a horizontal coordinate of the present transform coefficient is the position of the diagonal line corresponding to the present transform coefficient plus a difference between the position of the maximum coefficient of the diagonal line correspondingly and the position where the present transform coefficient is located, before minus the height of the transform block and plus 1, while a vertical coordinate is the height of the transform block minus 1 before minus the difference between the position of the maximum coefficient of the diagonal line correspondingly and the position where the present transform coefficient is located. That is, in a case of *j* being odd, and *w>=h*, the coordinate *x= i+delta_pos-h+1*, and the coordinate *y=h-1-delta_pos*. If the width of the transform block is less than the height of the transform block, the horizontal coordinate of the present transform coefficient is the difference between the position of the maximum coefficient on the diagonal line correspondingly and the position where the present transform coefficient is located, while a vertical coordinate is the position of the diagonal line corresponding to the present transform coefficient minus the difference between the position of the maximum coefficient on the diagonal line correspondingly and the position where the present transform coefficient is located. That is, in a case of *j* being odd, and *w<h*, the coordinate *x= delta_pos*, and the coordinate *y= i-delta_pos*.

If the present transform coefficient is located in the second region, in a case of the position of the diagonal line corresponding to the present transform coefficient being an even number, if the width of the transform block is greater than or equal to the height of the transform block, then the horizontal coordinate of the present transform coefficient is the position of the diagonal line corresponding to the present transform coefficient minus the difference between the position of the maximum coefficient on the diagonal line correspondingly and the position where the present transform coefficient is located, while the vertical coordinate is the difference between the position of the maximum coefficient on the diagonal line correspondingly and the position where the present transform coefficient is located. That is, in a case of *j* being even, and *w>=h*, the coordinate *x= i-delta_pos*, and the coordinate *y=delta_pos*. If the width of the transform block is less than the height of the transform block, then the horizontal coordinate of the present transform coefficient is the width of the transform block minus 1 before minus the difference between the position of the maximum coefficient of the diagonal line correspondingly and the position where the present transform coefficient is located, while the vertical coordinate is the position of the diagonal line corresponding to the present transform coefficient plus the difference between the position of the maximum coefficient of the diagonal line correspondingly and the position where the present transform coefficient is located, before minus the width of the transform block and plus 1. That is, in a case of *j* being even, and *w<h*, the coordinate *x=w-1-delta_pos*, and the coordinate *y= i+delta_pos-w+1*.

If the present transform coefficient is located in the third region, in a case of the position of the diagonal line corresponding to the present transform coefficient being an odd number, the horizontal coordinate of the present transform coefficient is the width of the transform block minus 1 before minus the difference between the position of the maximum coefficient of the diagonal line correspondingly and the position where the present transform coefficient is located, the vertical coordinate of the present transform coefficient is the height of the transform block minus 1 then adding the difference between the position of the maximum coefficient of the diagonal line correspondingly and the position where the present transform coefficient is located, followed by subtracting the position of the diagonal line corresponding to the present transform coefficient. That is, in a case of *i* being odd, the coordinate *x=w-1-delta_pos*, and the coordinate *y= h-1+delta_pos-i*.

If the present transform coefficient is located in the third region, in a case of the position of the diagonal line corresponding to the present transform coefficient being an even number, the horizontal coordinate of the present transform coefficient is the width of the transform block minus 1 before adding the difference between the position of the maximum coefficient of the diagonal line correspondingly and the position where the present transform coefficient is located, followed by subtracting the position of the diagonal line corresponding to the present transform coefficient, the vertical coordinate thereof is the height of the transform block minus 1 before minus the difference between the position of the maximum coefficient of the diagonal line correspondingly and the position where the present transform coefficient is located. That is, in a case of *i* being even, the coordinate *x=w-1+delta_pos-i*, and the coordinate *y= h-1-delta_pos*.

Repeating the steps stated above until the decoding sequences of all the transform coefficients in the transform block are converted into the coordinates.

Further, the step S4, resuming decoding the bit stream of the original video according to the plurality of coordinates corresponding to the plurality of transform coefficients, so as to obtain a video data having been decoded. The present step is in the prior art, thus no more details are listed herein.

The calculation method for calculating the transform coefficient for video decoding provided in the present application achieves converting the decoding sequence of the transform coefficient into the coordinates, by requiring the coefficient-position conversion table only, instead of requiring a large number of transform block scanning tables. During an application process, it is possible to use a *64×12*-bit register to store the coefficient-position conversion table. Compared with the prior art, it is possible to save around one hundred thousand gates of hardware cost while guaranteeing the performance, greatly reducing the hardware resource consumption when performing a decoding work with a non-SRCC enabling method, and solving the problem in the prior art that it requires a large hardware resource consumption when decoding with an existing non-SRCC enabling method.

The present application further provides a calculation apparatus for calculating the plurality of coordinates of the transform coefficients for video decoding, shown as FIG.6, comprising:
an acquisition circuit configured to acquire the bit stream of an original video and a transform block thereof correspondingly;
a transform circuit used for configuring the coefficient-position conversion table and calculating the coordinates corresponding to the coefficients in the transform block according to the coefficient-position conversion table;
a decoding circuit configured to decode the original video to obtain the video data having been decoded, according to the coordinates of the coefficients.

The present application provides the calculation apparatus for calculating the plurality of coordinates of the transform coefficients in the transform block for video decoding, by configuring the coefficient-position conversion table through the transform circuit, and dividing the transform block into three regions, in combination with the region characteristic, the coordinates of the transform coefficients are calculated out, so that when transforming the decoding sequence of the present transform coefficients into the coordinates according to the coefficient-position conversion table, it is possible to achieve calculating the coordinates of a plurality of various transform coefficients according to only one coefficient-position conversion table, in combination with a simple combination logic, thereby the consumption of the hardware resources is reduced when performing a decoding operation with a non-SRCC enabling method, and the problem is solved that an existing non-SRCC enabling method has a large consumption of the hardware resources during decoding.

Further, the present application provides a computer storage medium, the computer storage medium has an executable program stored; when the executable program is running, the calculation method for calculating the plurality of coordinates of the transform coefficients in the transform block for video decoding as stated above is achieved.

Further, the present application provides a chip, the chip is coupling with a storage, configured to execute a computer program stored in the storage, so as to run the calculation method for calculating the plurality of coordinates of the transform coefficients in the transform block for video decoding as stated above.

In a practical application, the chip may be a VPU (Video Processing Unit), a GPU (Graphics Processing Unit), an NPU (Net Processing Unit), and more.

It is noted that each embodiment in the present description is described in a progressive manner, and each embodiment focuses on the differences from other embodiments. A same or similar part among the embodiments can be referred to each other. In addition, a plurality of different parts among different embodiments can be used in combination with each other, which is not restricted in the present application.

The present application provides a calculation method and a calculation apparatus for calculating a plurality of coordinates of the transform coefficients in a transform block for video decoding, a computer storage medium, and a chip, comprising: obtaining a bit stream of an original video and a plurality of transform blocks corresponding to the bit stream; configuring a coefficient-position conversion table; calculating a plurality of coordinates corresponding to a plurality of transform coefficients in the transform block, according to the coefficient-position conversion table; and resuming decoding the bit stream of the original video according to the plurality of coordinates corresponding to the plurality of transform coefficients in the transform block, so as to obtain a video data having been decoded. By configuring the coefficient-position conversion table, and dividing the transform block into three regions, in combination with the region characteristic, the coordinates of the transform coefficients are calculated out, so that when transforming the decoding sequence of the present transform coefficients into the coordinates according to the coefficient-position conversion table, it is possible to achieve calculating the coordinates of a plurality of various transform coefficients according to only one coefficient-position conversion table, in combination with a simple combination logic, thereby the consumption of the hardware resources is reduced when performing a decoding operation with a non-SRCC enabling method, and the problem is solved that an existing non-SRCC enabling method has a large consumption of the hardware resources during decoding.

It is only a description of preferred embodiments of the present application hereinabove, instead of intending to limit the scope of the present application. Any modification and modification made by a person of ordinary skill in the art according to the above disclosure shall fall within the protection scope of the claims.

### INDUSTRIAL APPLICABILITY

The calculation method and the calculation apparatus for calculating the transform coefficient for video decoding, the computer storage medium, and the chip, provided in the present application, achieves converting the decoding sequence of the transform coefficient into the coordinates by requiring the coefficient-position conversion table only, instead of requiring a large number of transform block scanning tables. During an application process, it is possible to use a 64×12-bit register to store the coefficient-position conversion table. Compared with the prior art, it is possible to save around one hundred thousand gates of hardware cost while guaranteeing the performance, greatly reducing the hardware resource consumption when performing a decoding work with a non-SRCC enabling method, and solving the problem in the prior art that it requires a large hardware resource consumption when decoding with an existing non-SRCC enabling method.

## Claims

1. A calculation method for calculating a plurality of coordinates of a plurality of transform coefficients in a transform block for video decoding, comprising following steps:
obtaining a bit stream of an original video and a plurality of transform blocks corresponding to the bit stream;
configuring a coefficient-position conversion table, the coefficient-position conversion table having *N* elements arranged such that each of the *N* elements corresponds to a diagonal line in an *N×N* transform block in a direction from top left to bottom right sequentially, and an element value of the element is a total number of all coefficients locating on an upper left region of a corresponding diagonal line;
calculating a plurality of coordinates corresponding to a plurality of transform coefficients in the transform block, according to the coefficient-position conversion table; and
resuming decoding the bit stream of the original video according to the plurality of coordinates corresponding to the plurality of transform coefficients in the transform block, so as to obtain video data that has been decoded.

2. The calculation method according to claim 1, wherein the coefficient-position conversion table has 64 elements arranged, and each element corresponds to a diagonal line in a 64 × 64 transform block in a direction from top left to bottom right sequentially.

3. The calculation method according to claim 1, wherein the diagonal line comprises a preset angle diagonal line directed from lower left to upper right.

4. The calculation method according to claim 1, wherein the step of calculating the plurality of coordinates corresponding to the plurality of coefficients in the transform block, according to the coefficient-position conversion table, comprises following steps:
dividing the plurality of transform blocks into a first region, a second region, and a third region;
determining a region where a present transform coefficient is located, according to the coefficient-position conversion table based on a scanning sequence of the plurality of transform coefficients; and
calculating a coordinate corresponding to a present transform coefficient according to a region characteristic of the region having been determined where the present transform coefficient is located.

5. The calculation method according to claim 4, wherein the step of dividing the plurality of transform blocks into the first region, the second region, and the third region, comprises following steps:
arranging a diagonal line on each of the plurality of transform coefficients, starting from an upper left corner of one of the plurality of transform blocks, so that a total number *s* of the diagonal lines arranged on the transform block is *s=w+h-1*, where *w* is a total number of the plurality of transform coefficients in a width direction of the transform block, *h* is a total number of the plurality of transform coefficients in a height direction of the transform block; arranging *t*= *min (w, h)*;
dividing a plurality of transform coefficients corresponding to a first group of *t-1* diagonal lines into the first region, starting from the upper left corner of the transform block;
dividing a plurality of transform coefficients corresponding to a first group of *t-1* diagonal lines into the third region, starting from a lower right corner of the transform block; and
dividing a plurality of transform coefficients corresponding to a plurality of remaining diagonal lines into the second region.

6. The calculation method according to claim 5, wherein the step of determining the region where the present transform coefficient is located, according to the coefficient-position conversion table based on the scanning sequence of the plurality of transform coefficients, comprises following steps:
calculating a first threshold and a second threshold according to a minimum edge length of the transform block, the coefficient-position conversion table and a total number of the plurality of transform coefficients in the transform block; and
determining that the present transform coefficient is located in the first region, if the scanning sequence of a present transform coefficient is less than or equal to the first threshold ; or
determining that the present transform coefficient is located in the third region, if the scanning sequence of a present transform coefficient is greater than the second threshold; otherwise
determining that the present transform coefficient is located in the second region.

7. The calculation method according to claim 6, wherein the step of calculating the first threshold and the second threshold according to the minimum edge length of the transform block, the coefficient-position conversion table and the total number of the plurality of transform coefficients in the transform block, comprises following steps:
arranging an element value of a (*t-1*)-th element in the coefficient-position conversion table as the first threshold; and
arranging a difference between the total number of the plurality of transform coefficients in the transform block and the element value of the (*t-1*)-th element in the coefficient-position conversion table as the second threshold.

8. The calculation method according to claim 7, wherein the step of calculating the coordinate corresponding to the present transform coefficient according to the region characteristic of the region having been determined where the present transform coefficient is located, comprises following steps:
calculating a position of a diagonal line corresponding to the present transform coefficient, according to the scanning sequence of the present transform coefficient and the coefficient-position conversion table; and
calculating a coordinate of the present transform coefficient according to a parity of a position of the diagonal line corresponding to the present transform coefficient.

9. The calculation method according to claim 8, wherein the step of calculating the position of the diagonal line corresponding to the present transform coefficient, according to the scanning sequence of the present transform coefficient and the coefficient-position conversion table, comprises following steps:
calculating the position of the diagonal line corresponding to the present transform coefficient, according to the scanning sequence of the present transform coefficient and the coefficient-position conversion table; and
calculating a difference between a position of a maximum coefficient and a position where the present transform coefficient is located, on a diagonal line corresponding to the present transform coefficient.

10. The calculation method according to claim 9, wherein the step of calculating the position of the diagonal line corresponding to the present transform coefficient, according to the scanning sequence of the present transform coefficient and the coefficient-position conversion table, comprises following steps:
judging whether the scanning sequence of the present transform coefficient is greater than an element value of an *i*-th element in the coefficient-position conversion table but smaller than or equal to an element value of an *(i+1)*-th element in the coefficient-position conversion table, in a case of the present transform coefficient being located in the first region; and determining that the present transform coefficient is located on an *i*-th diagonal line, if the scanning sequence is;
determining the present transform coefficient to be located on a *j*-th diagonal line, in a case of the present transform coefficient being located in the second region, where *j*=(the scan order- the first threshold+ the minimum side length-1)/the minimum side length+ the minimum side length- 2; or
turning over the scanning sequence of the present transform coefficient to the first region of the transform block first, getting a new scanning sequence to be a difference between the total number of the transform coefficients in the transform block and an original scanning sequence plus 1, in a case of the present transform coefficient being located in the third region; then judging whether the new scanning sequence of the present transform coefficient is greater than the element value of the *i*-th element in the coefficient-position conversion table but smaller than or equal to the element value of the *(i+1)*-th element in the coefficient-position conversion table; and determining the present transform coefficient to be located on an *i*-th diagonal line, if the new scanning sequence is.

11. The calculation method according to claim 10, wherein the step of calculating the difference between the position of the maximum coefficient and the position where the present transform coefficient is located, on the diagonal line corresponding to the present transform coefficient, comprises following steps:
determining that the difference between the position of the maximum coefficient and the position where the present transform coefficient is located is a difference between the element value of the *(i+1)*-th element in the coefficient-position conversion table and the scanning sequence of the present transform coefficient, if the present transform coefficient is located in the first region;
determining that the difference between the position of the maximum coefficient and the position where the present transform coefficient is located is (((the scanning sequence- the first threshold+ the minimum side length- 1)>> a logarithmic value of the minimum edge length) << the logarithmic value of the minimum edge length)+ the first threshold- the scanning sequence, if the present transform coefficient is located in the second region; or
determining that the difference between the position of the maximum coefficient and the position where the present transform coefficient is located is a difference between the element value of the *(i+1)*-th element in the coefficient-position conversion table and a new scanning sequence of the present transform coefficient, after the scanning sequence of the present transform coefficient having been turned over to the first region of the transform block, if the present transform coefficient is locating in the third region.

12. The calculation method according to claim 11, wherein the step of calculating the coordinate of the present transform coefficient according to the parity of the position of the diagonal line corresponding to the present transform coefficient, if the present transform coefficient is located in the first region, comprises following steps:
determining that a horizontal coordinate of the present transform coefficient is the difference between the position of the maximum coefficient on the diagonal line corresponding to the present transform coefficient and the position where the present transform coefficient is located, and a vertical coordinate is the position of the diagonal line corresponding to the present transform coefficient minus the difference between the position of the maximum coefficient on the diagonal line corresponding to the present transform coefficient and the position where the present transform coefficient is located, in a case of the position of the diagonal line corresponding to the present transform coefficient being an odd number; and
determining that a horizontal coordinate is the position of the diagonal line corresponding to the present transform coefficient minus the difference between the position of the maximum coefficient on the diagonal line corresponding to the present transform coefficient and the position where the present transform coefficient is located, and a vertical coordinate of the present transform coefficient is the difference between the position of the maximum coefficient on the diagonal line corresponding to the present transform coefficient and the position where the present transform coefficient is located, in a case of the position of the diagonal line corresponding to the present transform coefficient being an even number.

13. The calculation method according to claim 11, wherein the step of calculating the coordinate of the present transform coefficient according to the parity of the position of the diagonal line corresponding to the present transform coefficient, if the present transform coefficient is located in the second region, comprises following steps:
determining that a horizontal coordinate of the present transform coefficient is the position of the diagonal line corresponding to the present transform coefficient plus a difference between the position of the maximum coefficient of the diagonal line correspondingly and the position where the present transform coefficient is located, before minus the height of the transform block and plus 1, and a vertical coordinate is the height of the transform block minus 1 before minus the difference between the position of the maximum coefficient of the diagonal line correspondingly and the position where the present transform coefficient is located, in a case of the position of the diagonal line corresponding to the present transform coefficient being an odd number, if a width of the transform block is greater than or equal to a height of the transform block, and determining that the horizontal coordinate of the present transform coefficient is the difference between the position of the maximum coefficient on the diagonal line correspondingly and the position where the present transform coefficient is located, and the vertical coordinate is the position of the diagonal line corresponding to the present transform coefficient minus the difference between the position of the maximum coefficient on the diagonal line correspondingly and the position where the present transform coefficient is located, if the width of the transform block is less than the height of the transform block; and
determining that the horizontal coordinate of the present transform coefficient is the position of the diagonal line corresponding to the present transform coefficient minus the difference between the position of the maximum coefficient on the diagonal line correspondingly and the position where the present transform coefficient is located, and the vertical coordinate is the difference between the position of the maximum coefficient on the diagonal line correspondingly and the position where the present transform coefficient is located, if the width of the transform block is greater than or equal to the height of the transform block, in a case of the position of the diagonal line corresponding to the present transform coefficient being an even number; and determining the horizontal coordinate of the present transform coefficient is the height of the transform block minus 1 before minus the difference between the position of the maximum coefficient of the diagonal line correspondingly and the position where the present transform coefficient is located, in a case of the width of the transform block being less than the height of the transform block, and determining the vertical coordinate is the position of the diagonal line corresponding to the present transform coefficient plus the difference between the position of the maximum coefficient of the diagonal line correspondingly and the position where the present transform coefficient is located, before minus the height of the transform block and plus 1.

14. The calculation method according to claim 11, wherein the step of calculating the coordinate of the present transform coefficient according to the parity of the position of the diagonal line corresponding to the present transform coefficient, if the present transform coefficient is located in the third region, comprises following steps:
determining the horizontal coordinate of the present transform coefficient is the width of the transform block minus 1 before minus the difference between the position of the maximum coefficient of the diagonal line correspondingly and the position where the present transform coefficient is located, and determining the vertical coordinate of the present transform coefficient is the height of the transform block minus 1 then adding the difference between the position of the maximum coefficient of the diagonal line correspondingly and the position where the present transform coefficient is located, followed by subtracting the position of the diagonal line corresponding to the present transform coefficient, in a case of the position of the diagonal line corresponding to the present transform coefficient being an odd number; and
determining that the horizontal coordinate of the present transform coefficient is the width of the transform block minus 1 before adding the difference between the position of the maximum coefficient of the diagonal line correspondingly and the position where the present transform coefficient is located, followed by subtracting the position of the diagonal line corresponding to the present transform coefficient, in a case of the position of the diagonal line corresponding to the present transform coefficient being an even number; and determining that the vertical coordinate thereof is the height of the transform block minus 1 before minus the difference between the position of the maximum coefficient of the diagonal line correspondingly and the position where the present transform coefficient is located.

15. A calculation apparatus for calculating the plurality of coordinates of the transform coefficients in the transform block for video decoding, configured to realize the calculation method for calculating the plurality of coordinates of the transform coefficients in the transform block for video decoding according to anyone of claim 1 to claim 14, comprising:
an acquisition circuit configured to acquire the bit stream of an original video and a transform block thereof correspondingly;
a transform circuit configured to form the coefficient-position conversion table and calculate the coordinates corresponding to the coefficients in the transform block according to the coefficient-position conversion table; and
a decoding circuit configured to decode the original video to obtain the video data that has been decoded, according to the coordinates of the coefficients.

16. A computer storage medium having an executable program stored therein, and achieving the calculation method for calculating the plurality of coordinates of the transform coefficients in the transform block for video decoding according to anyone of claim 1 to claim 14, in a case of the executable program being running.

17. A chip having a memory coupled therewith, configured to execute a computer program stored in the storage, so as to run the calculation method for calculating the plurality of coordinates of the transform coefficients in the transform block for video decoding according to anyone of claim 1 to claim 14.
